Europäisches Patentamt

European Patent Office

Office européen des brevets

(11) Publication number: **0 173 501**
A2

(12) # EUROPEAN PATENT APPLICATION

(21) Application number: 85305670.3

(22) Date of filing: 09.08.85

(51) Int. Cl.⁴: **B 01 D 53/02,** B 01 J 20/16

(30) Priority: 30.08.84 GB 8421918

(43) Date of publication of application: 05.03.86 Bulletin 86/10

(84) Designated Contracting States: BE DE FR GB IT NL

(71) Applicant: BP Chemicals Limited, Belgrave House 76 Buckingham Palace Road, London, SW1W 0SU (GB)

(72) Inventor: Pearce, Graeme Keith, BP Chemicals Limited Hull Works Saltend, Hedon Hull HU12 8DS (GB)

(74) Representative: Krishnan, Suryanarayana Kalyana et al, BP INTERNATIONAL LIMITED Patents Division Chertsey Road, Sunbury-on-Thames Middlesex TW16 7LN (GB)

(54) Selective adsorption of carbon dioxide on zeolites.

(57) This invention relates to a selective adsorption of carbon dioxide from mixtures thereof with non-acidic gases such as e.g. nitrogen and methane. The adsorption and regeneration cylces are suitably performed at pressures from 1 mbar absolute to 40 bar absolute and at temperatures from —80°C to 150°C. Separation of carbon dioxide and methane is particularly important in the petroleum industry for use of recovered $CO_2$ in enhanced oil recovery process.

1

## SELECTIVE ADSORPTION OF CARBON DIOXIDE ON ZEOLITES

The present invention relates to a process for selective adsorption of carbon dioxide from gaseous mixtures.

Several methods are known for the removal of carbon dioxide from gaseous mixtures. These include, for instance, absorption in solvents by chemical or physical mechanisms, separation using membranes and adsorption over zeolites.

Solvent absorption is most widely used of these processes as it can achieve bulk $CO_2$ separations with high recovery. Examples of chemical solvent systems are monoethanolamine and hot potassium carbonate. More recently, physical solvent systems such as Selexol have been used due to their reduced energy costs; however, capital costs are still high.

Membrane processes are increasingly used in the oil/gas field separations of $CO_2/CH_4$ where the recovered $CO_2$ can be used for enhanced oil recovery. In this case, capital cost and equipment size are both low but $CO_2$ recovery and purity are also low.

In the zeolite adsorption technique zeolite A is used for removing trace levels of $CO_2$ from gas streams. Substantially complete $CO_2$ removal is possible due to the high sorption energy between zeolite A and $CO_2$. However, regeneration must be carried out by thermal swing, hence this process is not suitable for bulk $CO_2$ separations.

Accordingly, the present invention is a process for selectively adsorbing carbon dioxide from a mixture thereof with non-acidic gases by passing the mixture over a zeolite and subsequently

1

recovering the adsorbed carbon dioxide during a regeneration cycle of the zeolite characterised in that the zeolite has a faujasite type structure which has been ion-exchanged with akali or alkaline earth metal ions and has a silicon to aluminium atomic ratio from 1.2-3.

Zeolites of the faujasite type are described in standard texts including "Zeolite Molecular Sieves, Structure, Chemistry and Use" by Breck, D.W., pp 92/93, published by John Wiley & Sons Inc. (1974) and in "Molecular Sieve Zeolites-1", Advances in Chemistry Series 101, edited by Gould, R.F., pp 171 et seq. and published by the American Chemical Society (1971). These zeolites are classified as having an FAU-type structure as characterised by their X-ray diffraction pattern and listed in the book by Meier, W.M. and Olsen, D.H. entitled, "Atlas of Zeolite Structure Types", p 37, published by the Structure Commission of the International Zeolite Association (1978) and distributed by Polycrystal Book Service, Pittsburgh, Pa., USA.

Examples of the zeolites of the FAU-structure type that may be used include zeolites X and Y provided that they have a silicon to aluminium atomic ratio from 1.2 to 3. Zeolites having a silicon to aluminium ratio from 1.5-3, especially those having a ratio from 2 to 3, eg zeolite Y are preferred.

The zeolites used may be ion exchanged with alkali or alkaline earth metal ions, such as sodium, by any of the conventional techniques. For instance, sodium ions may be introduced into the zeolite during synthesis by using sodium hydroxide as the alkali. Alternatively, the hydrogen form of the zeolite may be exchanged initially by treatment with sodium hydroxide solution, washed, dried and then granulated with colloidal silica and then dried. The resultant sodium ion exchanged zeolite having a silicon to aluminium atomic ratio from 1.2 to 1.5 (hereafter termed "NaX") or 1.5 to 3 (hereafter termed "NaY") is used for the selective adsorption of carbon dioxide from mixtures thereof with non-acidic gases.

Exmples of the non-acidic gases from which carbon dioxide can be separated by the present process include carbon monoxide, nitrogen and methane. Separation of mixtures of $CO_2$ and methane is particularly important in the petroleum industry especially as the $CO_2$ recovered can be used in the enhanced oil recovery process.

The selective adsorption is suitably carried out by passing the gaseous mixture containing carbon dioxide over the alkali/alkaline earth metal ion exchanged zeolite at ambient temperature eg 20°C and pressure eg 1 bar absolute. The adsorbed carbon dioxide may be recovered and the ion exchanged zeolite regenerated by applying a moderately low vacuum e.g. 10 mbar absolute at ambient temperature or by reducing the $CO_2$ partial pressure by use of a gas purge. For instance, using NaY with a silicon to aluminium ratio of 2.4, carbon dioxide was adsorbed from a 50/50 mixture thereof with nitrogen at 20°C and 1 bar absolute. The adsorption capacities for carbon dioxide and other non-acidic gases are shown in Table 1. The advantage of using a NaY zeolite is that it is highly selective for $CO_2$ in the presence of $N_2$, CO and $CH_4$ and it can be regenerated by the application of a vacuum or by a gas purge which enables a bulk $CO_2$ separation to be carried out.

The adsorption and regeneration cycles can be carried out at pressures from 1 mbar absolute to 40 bar absolute, preferably from 10 mbar absolute to 20 bar absolute. The loading on the zeolite increases with the partial pressure of the adsorbed component. Desorption occurs rapidly as the partial pressure of $CO_2$ is reduced.

Adsorption can be carried out in the temperature range -80°C to 150°C, preferably -50°C to +100°C. Loading is increased at lower temperatures whilst rapid adsorption and desorption rates are maintained.

It is preferable that the gaseous mixture being treated does not contain moisture as this will reduce the adsorption capacity of the zeolite.

The present invention is further illustrated with reference to the following Examples.

EXAMPLES

A standard NaY zeolite powder (obtained from Laporte Industries plc) was granulated with colloidal silica (Ludox AS 40.

Registered Trade Mark obtained from Du Pont) to give granules containing 30% silica. The granules were activated by heating at 350°C for four hours. The adsoprtion capacity was determined by passing gas at 20°C through the granules at atmospheric pressure. The zeolite was regenerated by applying a vacuum of 1 mbar absolute for 10 minutes. Capacities of NaY for $CO_2$, $N_2$, CO and $CH_4$ are given in Table 1. Table 2 lists adsorbed gas compositions for various $CO_2/N_2$ feed gas mixtures. $CO_2/CH_4$ and $CO_2/CO$ separation factors were found to be similar.

### TABLE 1

| Gas | Adsorption* | |
|---|---|---|
| | ml**/gm | %w/w |
| $CO_2$ | 58.9 | 10.7 |
| $N_2$ | 2.2 | 0.3 |
| CO | 1.5 | 0.2 |
| $CH_4$ | 1.5 | 0.1 |

\* binder free basis

\*\* expressed at NTP

### TABLE 2

Feed Gas Composition, % v/v in a ($CO_2$ + $N_2$) Mixture

| $CO_2$ in Feed | $CO_2$ in Adsorbed Gas |
|---|---|
| 14.7 | 89.1 |
| 21.8 | 91.6 |
| 24.6 | 86.7 |
| 35.1 | 86.9 |
| 39.2 | 92.7 |
| 39.6 | 94.4 |
| 51.2 | 94.5 |
| 64.5 | 98.4 |
| 74.0 | 99.3 |
| 85.0 | 100 |

Claims:

1. A process for selectively adsorbing carbon dioxide from a mixture thereof with non-acidic gases by passing the mixture over a zeolite and subsequently recovering the adsorbed carbon dioxide during a regeneration cycle of the zeolite characterised in that the zeolite has a faujasite type structure which has been ion-exchanged with alkali or alkaline earth metal ions and has a silicon to aluminium atomic ratio from 1.2-3.

2. A process according to claim 1 wherein the zeolite of the faujasite type structure is zeolite X or zeolite Y.

3. A process according to claim 1 or 2 wherein the mixture of gases comprises carbon dioxide, nitrogen and methane.

4. A process according to any one of the preceding claims wherein the adsorption of carbon dioxide is carried out at a temperature from -80°C to 150°C.

5. A process according to any one of the preceding claims wherein the adsorption and regeneration cycles are carried out at pressures from 1 mbar absolute to 40 bar absolute.

6. A process according to any one of the preceding claims wherein the adsorption and regeneration cycles are carried out at pressures from 10 mbar absolute to 20 bar absolute.

7. A process for selectively adsorbing carbon dioxide as claimed in claim 1 and as hereinbefore described with reference to the Examples.